Europäisches Patentamt

European Patent Office

Office européen des brevets

(11) Veröffentlichungsnummer: **0 414 323 A2**

## (12) EUROPÄISCHE PATENTANMELDUNG

(21) Anmeldenummer: 90202244.1

(22) Anmeldetag: 21.08.90

(51) Int. Cl.⁵: **G11B  15/22**

(30) Priorität: **25.08.89 AT 2016/89**

(43) Veröffentlichungstag der Anmeldung:
**27.02.91 Patentblatt  91/09**

(84) Benannte Vertragsstaaten:
**CH DE FR GB LI**

(71) Anmelder: **N.V. Philips' Gloeilampenfabrieken**
**Groenewoudseweg 1**
**NL-5621 BA Eindhoven(NL)**

(72) Erfinder: **Schafler, Winfried**
**c/o INT. OCTROOIBUREAU B.V., Prof.**
**Holstlaan 6**
**NL-5656 AA Eindhoven(NL)**

(74) Vertreter: **Van Weele, Paul Johannes Frits et**
**al**
**INTERNATIONAAL OCTROOIBUREAU B.V.**
**Prof. Holstlaan 6**
**NL-5656 AA Eindhoven(NL)**

(54) **Aufzeichnung- und/oder Wiedergabegerät für einen bandförmigen Aufzeichnungsträger.**

(57) Ein Aufzeichnungs- und/oder Wiedergabegerät (1) für einen bandförmigen Aufzeichnungsträger (2), der zwischen zwei rotierend antreibbaren Wickelkernen (4, 5) verläuft, weist zum Antreiben der Wickelkerne zwei Wickeldorne (10, 11) auf, die je mit einem Antriebsrad (12, 13) verbunden sind. Zum Abbremsen der beiden Antriebsräder (12, 13) ist eine Bremseinrichtung (30) vorgesehen, die einen sekrecht zu einer Ebene (34) durch die Achsen (31, 32) der beiden Antriebsräder (12, 13) verstellbaren Träger (33) mit zwei Bremsflächen (39, 40) für die beiden Antriebsräder aufweist. Der Träger (33) ist rahmenförmig ausgebildet und weist zwei die Ebene (34) durch die Achsen (31, 32) der beiden Antriebsräder (12, 13) durchsetzende Trägerabschnitte (35, 36) auf, von denen jeder außerhalb des Bereiches zwischen den beiden Antriebsrädern (12, 13) an einem der beiden Antriebsräder (12, 13) seitlich entlang verlaufend angeordnet ist.

FIG.1

# AUFZEICHNUNG- UND/ODER WIEDERGABEGERÄT FÜR EINEN BANDFÖRMIGEN AUFZEICHNUNGSTRÄGER

Die Erfindung bezieht sich auf Aufzeichnungs- und/oder Wiedergabegerät für einen bandförmigen Aufzeichnungsträger, der zwischen zwei rotierend antreibbaren Wickelkernen verläuft, mit zwei zum Antreiben der beiden Wickelkerne vorgesehenen Wickeldornen, mit zwei mit den beiden Wickeldornen verbundenen, rotierend antreibbaren Antriebsrädern und mit einer zum Bremsen der beiden Antriebsräder vorgesehenen Bremseinrichtung, die einen im wesentlichen senkrecht zu einer Ebene durch die Achsen der beiden Antriebsräder verstellbaren Träger aufweist der diese Ebene durchsetzt und an dem von der Ebene in einer ersten zur Ebene senkrechten Richtung entfernt zwei Bremsflächen zum Zusammenwirken mit den beiden Antriebsrädern vorgesehen sind und an dem von der Ebene in einer zur ersten Richtung entgegengesetzten zweiten Richtung entfernt eine Verstelleinrichtung zum Verstellen des Trägers angreift. Ein solches Gerät ist beispielsweise aus der DE-AS 10 81 686 bekannt.

Bei dem bekannten Gerät ist der Träger der Bremseinrichtung im wesentlichen balkenförmig ausgebildet und senkrecht zur Ebene durch die Achsen der beiden Antriebsräder verlaufend in dem Bereich zwischen den beiden Antriebsrädern angeordnet. Es muß daher ein ausreichend großer Abstand zwischen den beiden Antriebsrädern vorgesehen sein, um den Träger der Bremseinrichtung in dem Bereich zwischen den beiden Antriebsrädern anordnen zu können, und in dem Bereich zwischen den beiden Antriebsrädern können keine anderen zum Zusammenwirken mit den beiden Antriebsrädern vorgesehene Geräteteile, wie beispielsweise eine wahlweise mit den beiden Antriebsrädern in Antriebsverbindung bringbare Antriebswelle, angeordnet werden.

Die Erfindung hat sich zur Aufgabe gestellt, die vorstehend angeführten Schwierigkeiten zu vermeiden und ein Gerät der eingangs angeführrenten Gattung so auszubilden,daß der Abstand zwischen den beiden Antriebsrädern möglichst klein sein kann und daß in dem Bereich zwischen den beiden Antriebsrädern andere zum Zusammenwirken mit den beiden Antriebsrädern vorgesehene Geräteteile angeordnet werden können. Hiefür ist die Erfindung dadurch gekennzeichnet, daß der Träger rahmen förmig ausgebildet ist und zwei die Ebene durch die Achsen der beiden Antriebsräder durchsetzende Trägerabschnitte aufweist, von denen jeder außerhalb des Bereiches zwischen den beiden Antriebsrädern an einem der beiden Antriebsräder seitlich entlang verlaufend angeordnet ist. Aufgrund der rahmenförmigen Ausbildung des Trägers ist vorteilhafterweise erreicht, daß der Abstand zwischen den beiden Antriebsrädern klein gewählt werden kann und daß in dem Bereich zwischen den beiden Antriebsrädern andere zum Zusammenwirken mit den beiden Antriebsrädern vorgesehene Geräteteile angeordnet werden können. Infolge des kleinen Abstandes zwischen den beiden Antriebsrädern können dieselben bei vorgegebenem Achsabstand derselben einen möglichst großen Durchmesser aufweisen, was hinsichtlich einer möglichst großen erzielbaren Geschwindigkeitsuntersetzung und eines möglichst großen auf die Antriebsräder übertragbaren Drehmomentes vorteilhaft ist.

Als besonders vorteilhaft hat sich erwiesen, wenn die beiden die Ebene durch die Achsen der beiden Antriebsräder durchsetzenden Trägerabschnitte des Trägers entlang der den Wickeldornen zugewandten Stirnseiten der Antriebsräder seitlich verlaufend angeordnet sind. Hiedurch ist erreicht, daß die beiden Trägerabschnitte quer zur axialen Richtung der Wickeldorne gesehen innerhalb des ohnehin für die Wickeldorne vorgesehenen Raumbereiches untergebracht werden können, was hinsichtlich einer möglichst geringen Bauhöhe vorteilhaft ist. Weiters ist hiedurch erreicht, daß in axialer Richtung der Wickeldorne gesehen die Trägerabschnitte innerhalb des von den beiden Antriebsrädern eingenommenen Flächenbereiches liegen können, was im Hinblick auf eine möglichst kompakte Ausbildung in Richtung quer zu den Achsen der Antriebsräder vorteilhaft ist.

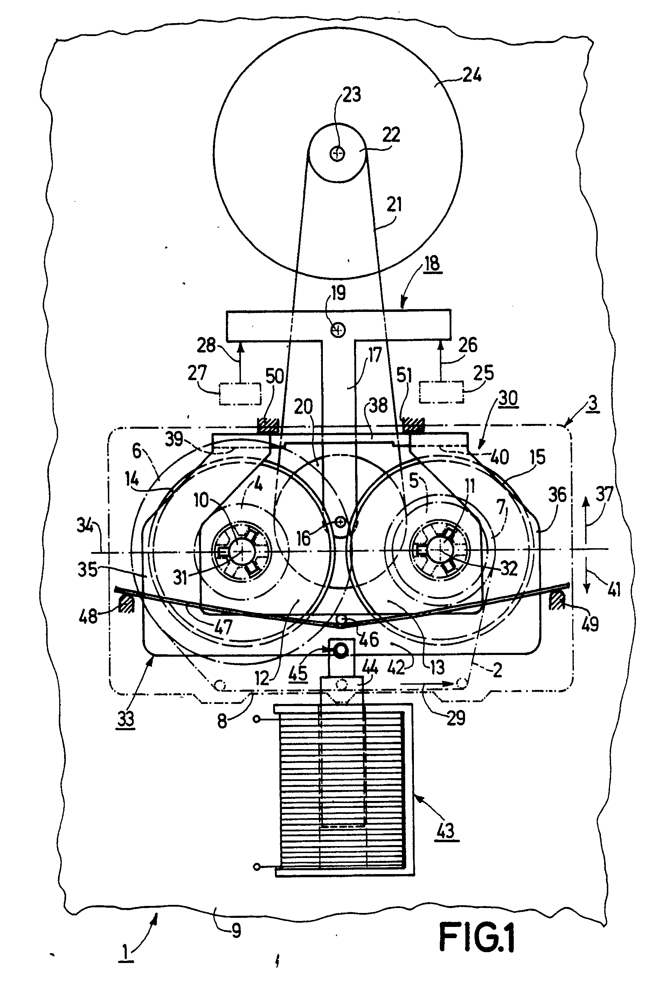

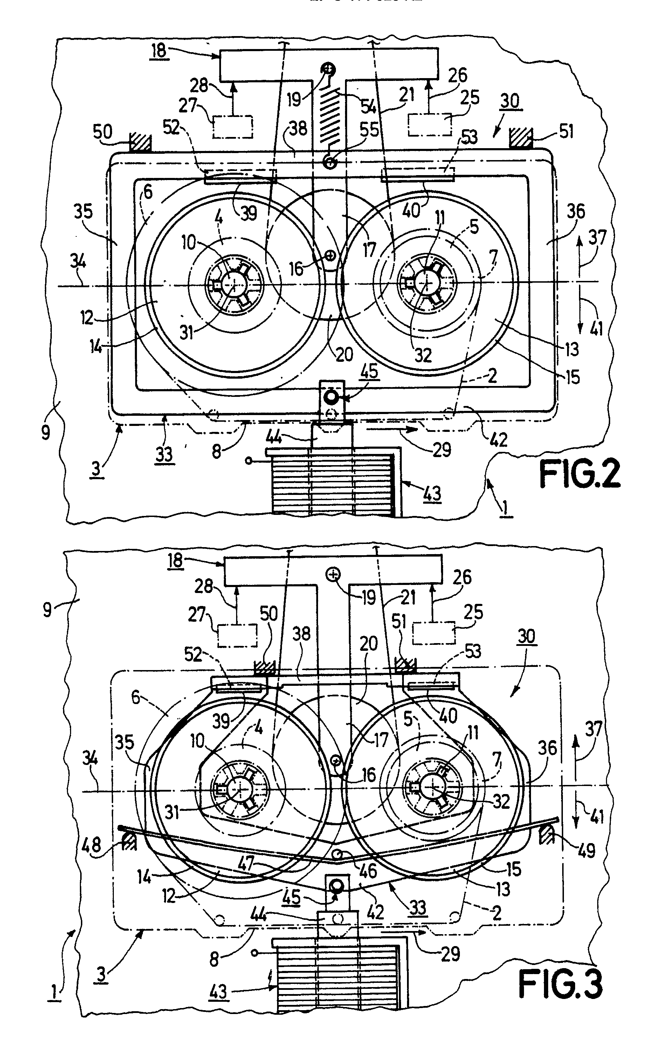

Die Erfindung wird im folgenden anhand von drei Ausführungsbeispielen, auf die sie jedoch nicht beschränkt sein soll, näher beschrieben. Die Fig.1 zeigt schematisch in Draufsicht einen für die Erfindung wesentlichen Teil eines Aufzeichnungs- und Wiedergabegerätes gemäß einem ersten Ausführungsbeispiel für ein in einer Kassette untergebrachtes Magnetband mit zwei je mit einem Wikkeldorn verbundenen Antriebsrädern und mit einer Bremseinrichtung für die beiden Antriebsräder, die einen rahmenförmigen Träger aufweist, der zwei die Ebene durch die Achsen der beiden Antriebsräder durchsetzende Trägerabschnitte aufweist, die entlang der den Wickeldornen zugewandten Stirnseiten der Antriebsräder verlaufend angeordnet sind. Die Fig.2 zeigt auf analoge Weise wie die Fig. 1 ein Aufzeichnungs- und Wiedergabegerät gemäß einem zweiten Ausführungsbeispiel, bei dem eine Bremseinrichtung für zwei je mit einem Wickeldorn verbundene Antriebsräder einen rahmenförmigen Träger aufweist, der zwei die Ebene durch die Achsen der beiden Antriebsräder durchsetzende Trägerabschnitte aufweist, die entlang der voneinander abgewandten Bereiche der Umfangsseiten der beiden Antriebsräder verlaufend angeordnet sind. Die Fig.3 zeigt auf analoge Weise wie die Figuren 1 und 2 ein Aufzeichnungs- und Wiedergabegerät gemäß einem dritten Ausführungsbeispiel, bei dem eine Bremseinrichtung für zwei je mit einem Wickeldorn verbundene Antriebsräder einen rahmenförmigen Träger aufweist, der zwei die Ebene durch die Achsen der beiden Antriebsräder durchsetzende Trägerabschnitte aufweist, die entlang der von den Wickeldornen abgewandten Stirnseiten der Antriebsräder verlaufend angeordnet sind.

Die Fig.1 zeigt schematisch einen Teil eines Aufzeichnungs- und Wiedergabegerätes 1 für einen bandförmigen Aufzeichnungsträger 2, der als Magnetband ausgebildet ist. Das Magnetband 2 ist in einer in das Gerät 1 einsetzbaren Kassette 3 untergebracht, die in Fig.1 schematisch mit strichpunktierten Linien dargestellt ist. Zur Aufnahme der Kassette weist das Gerät eine nicht dargestellte wannenförmige Kassettenaufnahme auf. Das Magnetband 2 verläuft in der Kassette 3 zwischen zwei nebeneinanderliegenden, zwischen den beiden Hauptwänden der Kassette drehbar gelagerten, rotierend antreibbaren Wickelkernen 4 und 5, auf die in der in Fig. 1 dargestellten Situation unterschiedlich große Bandwickel 6 und 7 aufgewickelt sind. Von einem zum anderen der beiden Wickelkerne 4 und 5 ist das Magnetband 2 längs einer langen Kassettenschmalseite 8 geführt, in der in bekannter Weise Durchbrüche vorgesehen sind, durch die hindurch nicht dargestellte geräteseitige Magnetköpfe zum Aufzeichnen und Wiedergeben sowie zum Löschen von Informationssignalen, beispielsweise von Sprachsignalen, mit dem Magnetband 2 in Abtastverbindung bringbar sind.

Das Gerät 1 weist zum Antreiben der beiden Wickelkerne 4 und 5 zwei auf einem im wesentlichen plattenförmigen Chassis 9 drehbar gelagerte, rotierend antreibbare Wickeldorne 10 und 11 auf, die beim Einsetzen einer Kassette 3 in das Gerät mit den beiden Wickelkernen 4 und 5 in Antriebsverbindung treten. Mit jedem der beiden Wickeldorne 10 und 11 ist koaxial ein Antriebsrad 12 beziehungsweise 13 drehfest verbunden. Die beiden Antriebsräder 12 und 13 sind als Reibräder ausgebildet und umfangsseitig mit einem ringförmigen Gummibelag 14 und 15 versehen.

Zum Antreiben der beiden Reibräder 12 und 13 weist das Gerät 1 eine mittig zwischen den beiden Reibrädern angeordnete Antriebswelle 16 auf, die wahlweise mit den Gummibelägen 14 und 15 der beiden Reibräder 12 und 13 in kraftschlüssige Antriebsverbindung bringbar ist. Die Antriebswelle 16 ist am freien Ende eines Armes 17 eines dreiarmigen Lagerbockes 18 drehbar gelagert. Der Lagerbock 18 ist mit einer Lagerwelle 19 am Chassis 9 schwenkbar gelagert. Mit der Antriebswelle 16 ist koaxial ein Pesenrad 20 drehfest verbunden, das über eine Pese 21 von einem weiteren Pesenrad 22 her antreibbar ist. Das weitere Pesenrad 22 ist auf der Welle 23 eines in entgegengesetzten Drehrichtungen mit konstanter Drehzahl antreibbaren Motors 24 befestigt. Über diese Antriebsverbindung ist die Antriebswelle 16 vom Motor 24 her wahlweise in entgegengesetzten Drehrichtungen antreibbar.

Der Lagerbock 18 ist aus der in Fig.1 dargestellten neutralen Mittellage, in der er beispielsweise mittels einer nicht dargestellten Rückstellfeder gehalten ist, in entgegengesetzten Schwenkrichtungen verschwenkbar, um die Antriebswelle 16 wahlweise mit einem der beiden Reibräder 12 und 13 in kraftschlüssige Antriebsverbindung zu bringen. Durch Betätigen einer schematisch angedeuteten Taste 25 ist über eine symbolisch mit einem Pfeil 26 angedeutete Verstelleinrichtung der Lagerbock 18 gemäß Fig.1 entgegen dem Uhrzeigersinn verschwenkbar, wobei dann die Antriebswelle 16 mit dem Reibrad 13 in kraftschlüssige Antriebsverbindung kommt. Durch Betätigen einer schematisch angedeuteten weiteren Taste 27 ist über eine symbolisch mit einem Pfeil 28 angedeutete weitere Verstelleinrichtung der Lagerbock 18 gemäß Fig. 1 im Uhrzeigersinn verschwenkbar, wobei dann die Antriebswelle 16 mit dem Reibrad 12 in kraftschlüssige Antriebsverbindung kommt.

Bei an das Reibrad 13 angedrückter Antriebswelle 16 wird die Antriebswelle 16 vom Motor 24 her mit konstanter Drehzahl im Uhrzeigersinn angetrieben. Dadurch wird über das Reibrad 13 und den Wickeldorn 11 der Wickelkern 5 entgegen dem Uhrzeigersinn angetrieben und dabei das Magnetband 2 auf den Wickelkern 5 aufgewickelt. Dies entspricht einer Betriebsart "Normaler Vorlauf" in der das Magnetband 2 in Richtung des Pfeiles 29 längs der Kassettenschmalseite 8 an den nicht dargestellten Magnetköpfen entlang bewegt wird, wobei in einer ersten Spur des Magnetbandes 2 Informationssignale auf dem Magnetband aufgezeichnet beziehungsweise von demselben wiedergegeben werden können. Bei an das Reibrad 12 angedrückter Antriebswelle 16 wird die Antriebswelle 16 vom Motor 24 her mit konstanter Drehzahl entgegen dem Uhrzeigersinn angetrieben. Dadurch wird über das Reibrad 12 und den Wickeldorn 10 der Wickelkern 4 im Uhrzeigersinn angetrieben und dabei das Magnetband 2 auf den Wickelkern 4 aufgewickelt. Dies entspricht einer Betriebsart "Normaler Rücklauf", die auch "Reverse-Lauf" genannt wird, in der das Magnetband 2 entgegen der Richtung des Pfeiles 29 längs der Kassettenschmalseite 8 an den nicht dargestellten Magnetköpfen entlang bewegt wird, wobei in einer zweiten Spur des Magnetbandes 2 Informationssignale auf dem Magnetband aufgezeichnet beziehungsweise von demselben wiedergegeben werden können.

Um nach einem Antreiben eines der beiden Reibräder 12 und 13 mittels der Antriebswelle 16 die beiden Reibräder 12 und 13 zum Stillstand bringen zu können, ist eine Bremseinrichtung 30 für die beiden Reibräder 12 und 13 vorgesehen. Die Bremseinrichtung 30 weist einen senkrecht zur Ebene durch die Achsen 31 und 32 der beiden Reibräder 12 und 13 verstellbaren, auf nicht näher dargestellte Weise verschiebbar geführten Träger 33 für zwei Bremsflächen für die beiden Reibräder auf. Die Ebene durch die Achsen 31 und 32 der beiden Reibrä der 12 und 13 ist in Fig.1 mit einer strichpunktierten Linie dargestellt und mit dem Bezugszeichen 34 bezeichnet. Der Träger 33 ist hiebei vorteilhafterweise rahmenförmig ausgebildet und weist zwei die Ebene 34 durch die Achsen 31 und 32 der beiden Reibräder 12 und 13 durchsetzende flache Trägerabschnitte 35 und 36 auf, von denen jeder außerhalb des Bereiches zwischen den beiden Reibrädern an einem der beiden Reibräder 12 und 13 seitlich entlang verlaufend angeordnet ist. In vorliegendem Fall sind diese beiden Trägerabschnitte 35 und 36 entlang der den Wickeldornen 10 und 11 zugewandten Stirnseiten der beiden Reibräder 12 und 13 seitlich verlaufend angeordnet. In einer ersten durch einen Pfeil 37 angegebenen, zur Ebene 34 senkrechten Richtung von der Ebene 34 entfernt sind die beiden flachen Trägerabschnitte 35 und 36 über einen ebenfalls flachen Steg 38 miteinander verbunden, der gegenüber den Trägerabschnitten 35 und 36 im rechten Winkel abgewinkelt verläuft. An dem abgewinkelten Steg 38 sind zwei Bremsflächen 39 und 40 für die beiden Reibräder 12 und 13 vorgesehen, die unmittelbar durch zwei Begrenzungsflächen des Steges 38 gebildet sind und die mit den Gummibelägen 14 und 15 der Reibräder 12 und 13 in Wirkverbindung bringbar sind. In einer zweiten durch einen Pfeil 41 angegebenen, zur Ebene 34 senkrechten Richtung von der Ebene 34 entfernt sind die beiden flachen Trägerabschnitte 35 und 36 über einen auf demselben Niveau wie die Trägerabschnitte 35 und 36 liegenden flachen Steg 42 miteinander verbunden. An diesem Steg 42 greift eine Verstelleinrichtung 43 zum Verstellen des Trägers 33 an. Die Verstelleinrichtung 43 ist durch einen Tauchankermagneten gebildet, dessen Tauchanker 44 über eine Stift-Schlitz-Verbindung 45 mit dem flachen Steg 42 des Trägers 33 gekoppelt ist. Weiters steht von dem Steg 42 ein Stift 46 ab, an dem eine Blattfeder 47 angreift, die sich mit ihren freien Enden an zwei im Gerät stationär angeordneten Anschlägen 48 und 49 abstützt und die den Träger 33 in Richtung des Pfeiles 37 belastet und auf diese Weise den Träger 33 mit seinem Steg 38 gegen zwei im Gerät stationär angeordnete Begrenzungsanschläge 50 und 51 drückt, wenn der Tauchankermagnet 43 nicht erregt ist.

Zum Abbremsen der beiden Reibräder 12 und 13 wird der Tauchankermagnet 43 erregt, wodurch von dessen Tauchanker 44 über die Stift-Schlitz-Verbindung 45 der Träger 33 in Richtung des Pfeiles 41 entgegen der Kraft der Blattfeder 47 verschoben wird, wobei die Bremsflächen 39 und 40 an die Gummibeläge 14 und 15 der Reibräder 12 und 13 angedrückt werden und dadurch die Reibräder abgebremst und zum Stillstand gebracht werden. Wenn die Stromversorgung des Tauchankermagneten 43 unterbrochen wird, fällt derselbe wieder ab, wobei dann die Blattfeder 47 den Träger 33 in Richtung des Pfeiles 37 verstellt, bis sich der Träger 33 mit seinem Steg 38 an den Begrenzungsanschlägen 50 und 51 abstützt, wobei dann die Bremsflächen 39 und 40 von den Gummibelägen 14 und 15 der beiden Reibräder 12 und 13 abgehoben und dadurch die beiden Reibräder 12 und 13 wieder ungebremst sind.

Wie aus Fig.1 ersichtlich ist, kann aufgrund der rahmenförmigen Ausbildung des Trägers 33 der Bremseinrichtung 30 vorteilhafterweise in dem Bereich zwischen den beiden Reibrädern 12 und 13 eine Antriebswelle 16 zum Antreiben der beiden Reibräder angeordnet werden und kann weiters der Durchmesser der beiden Reibräder vorteilhafterweise möglichst groß gewählt werden, was hinsichtlich einer möglichst großen Geschwindigkeitsuntersetzung und eines möglichst großen von der Antriebswelle 16 auf die Reibräder 12 und 13 übertragbaren Drehmomentes vorteilhaft ist. Dadurch, daß die flachen Trägerabschnitte 35 und 36 und der flache Steg 42 des Trägers 33 entlang der den Wickeldornen 10 und 11 zugewandten Stirnseiten der Reibräder 12 und 13 verlaufend angeordnet sind, sind diese Teile des Trägers 33 quer zur axialen Richtung der Wickeldorne 10 und 11 gesehen innerhalb des ohnehin für die Wickeldorne vorgesehenen Raumbereiches untergebracht, was hinsichtlich einer möglichst geringen Bauhöhe vorteilhaft ist. In Richtung der Achsen 31 und 32 der Wickeldorne 10 und 11 gesehen liegen die Trägerabschnitte 35 und 36 und der Steg 42 des Trägers 33 im wesentlichen innerhalb des von den beiden Reibrädern 12 und 13 eingenommenen Flächenbereiches, so daß diese Teile des Trägers 33 auch in Richtung der Achsen 31 und 32 gesehen gegenüber den Reibrädern keinen zusätzlichen Raumbedarf in Anspruch nehmen, was im Hinblick auf eine möglichst kompakte Ausbildung in Richtung quer zu den Achsen der Reibräder vorteilhaft ist.

Bei dem in Fig.2 dargestellten Aufzeichnungs- und Wiedergabegerät 1 ist der rahmenförmige Träger 33 der Bremseinrichtung 30 rechteckig ausgebildet und die beiden die Ebene 34 durch die Achsen 31 und 32 der beiden Reibräder 12 und 13 durchsetzenden Trägerabschnitte 35 und 36 und die beiden die Trägerabschnitte 35 und 36 miteinander verbindenden Stege 38 und 42 liegen im wesentlichen auf demselben Niveau wie die beiden Reibräder 12 und 13. Dabei sind die Trägerabschnitte 35 und 36 an den voneinander abgewandten Bereichen der Umfangsseiten der beiden Reibräder 12 und 13 seitlich entlang verlaufend angeordnet. Eine solche Ausbildung und Anordnung des Trägers 33 der Bremseinrichtung 30 bringt den Vorteil, daß der Träger 33 in axialer Richtung der Reibräder überhaupt keinen zusätzlichen Raumbedarf in Relation zu den Reibrädern in Anspruch nimmt. Die Bremsflächen 39 und 40 der Bremseinrichtung 30 sind bei vorliegendem Gerät gemäß Fig.2 durch die Begrenzungsflächen von zwei mit dem Steg 38 verbundenen Bremsbacken 52 und 53 aus Gummi gebildet. Als Rückstellfeder für den Träger 33 der Bremseinrichtung 30 ist in vorliegendem Fall eine Zugfeder 54 vorgesehen, die einerseits an der Lagerwelle 19 des Lagerbockes 18 und andererseits an einem vom Steg 38 abstehenden Stift 55 eingehängt ist.

Bei dem in Fig.3 dargestellten Aufzeichnungs- und Wiedergabegerät ist der rahmenförmig ausgebildete Träger 33 der Bremseinrichtung 30 gegenüber den Reibrädern 12 und 13 so angeordnet, daß dessen Trägerabschnitte 35 und 36, die die Ebene 34 durch die Achsen 31 und 32 der beiden Reibräder 12 und 13 durchsetzen, entlang der von den Wickeldornen 10 und 11 abgewandten Stirnseiten der Reibräder seitlich verlaufend angeordnet sind. Somit liegt bei dem Gerät gemäß Fig.3 der Träger 33 der Bremseinrichtung 30 im wesentlichen unterhalb der beiden Reibräder 12 und 13, wodurch die Reibräder nahe an die ihnen zugewandte Hauptwand der Kassette 3 angrenzend angeordnet und die Wickeldorne 10 und 11 dementsprechend kurz ausgebildet werden können. Bei dem Gerät gemäß Fig.3 sind die Bremsflächen 39 und 40 der Bremseinrichtung 30 ebenso wie beim Gerät gemäß Fig.2 durch die Begrenzungsflächen von zwei mit dem abgewinkelten Steg 38 des Trägers 33 verbundenen Bremsbacken 52 und 53 aus Gummi gebildet.

Auch bei den Geräten gemäß den Figuren 2 und 3 kann aufgrund der rahmenförmigen Ausbildung des Trägers 33 der Bremseinrichtung 30 vorteilhafterweise in dem Bereich zwischen den beiden Reibrädern 12 und 13 eine Antriebswelle 16 zum Antreiben der beiden Reibräder angeordnet und der Durchmesser der beiden Reibräder 12 und 13 möglichst groß gewählt werden.

Das Anordnen der Antriebswelle 16 zwischen den beiden Reibrädern 12 und 13, wie dies bei den Geräten gemäß den drei vorstehend beschriebenen Ausführungsbeispielen der Fall ist, ist insbesondere dann von Vorteil, wenn es sich wie bei den vorstehend beschriebenen Geräten um sogenannte Reverse-Geräte handelt, bei denen die beiden Wickelkerne 4 und 5 zwar in entgegengesetzten Drehrichtungen, aber sonst in gleicher Weise über die Reibräder 12 und 13 angetrieben werden sollen, um das Magnetband 2 auf gleiche Weise in entgegensetzten Bandlaufrichtungen zum Aufzeichnen und Wiedergeben antreiben zu können.

Die Erfindung ist nicht auf die vorstehend beschriebenen Ausführungsbeispiele beschränkt. Beispielsweise kann ein rahmenförmiger Träger einer Bremseinrichtung auch ovalförmig ausgebildet sein. Als Verstelleinrichtung für einen rahmenförmigen Träger einer Bremseinrichtung kann anstelle eines Tauchankermagneten auch ein Magnet anderer Bauart oder eine mechanische Verstelleinrichtung vorgesehen sein. Anstelle einer Antriebswelle zum Antreiben der mit den Wickeldornen verbundenen Antriebsräder kann auch ein Antriebsreibrad oder auch ein Antriebszahnrad vorgesehen sein, wobei im letztgenannten Fall die mit den Wickeldornen verbundenen Antriebsräder als Zahnräder ausgebildet sind, die dabei zu denselben koaxiale zylidrische Ansätze aufweisen, mit denen die an dem rahmenförmigen Träger einer Bremseinrichtung vorgesehenen Bremsflächen zusammenwirken.

## Ansprüche

1. Aufzeichnungs- und/oder Wiedergabegerät für einen bandförmigen Aufzeichnungsträger, der zwischen zwei rotierend antreibbaren Wickelkernen verläuft, mit zwei zum Antreiben der beiden Wickelkerne vorgesehenen Wickeldornen, mit zwei mit den beiden Wickeldornen verbundenen, rotierend antreibbaren Antriebsrädern und mit einer zum Bremsen der beiden Antriebsräder vorgesehenen Bremseinrichtung, die einen im wesentlichen senkrecht zu einer Ebene durch die Achsen der beiden Antriebsräder verstellbaren Träger aufweist der diese Ebene durchsetzt und an dem von der Ebene in einer ersten zur Ebene senkrechten Richtung entfernt zwei Bremsflächen zum Zusammenwirken mit den beiden Antriebsrädern vorgesehen sind und an dem von der Ebene in einer zur ersten Richtung entgegengesetzten zweiten Richtung entfernt eine Verstelleinrichtung zum Verstellen des Trägers angreift dadurch gekennzeichnet, daß der Träger rahmenförmig ausgebildet ist und zwei die Ebene durch die Achsen der beiden Antriebsräder durchsetzende Trägerabschnitte aufweist, von denen jeder außerhalb des Bereiches zwischen den beiden Antriebsräder an einem der beiden Antriebsräder seitlich entlang verlaufend angeordnet ist.

2. Gerät nach Anspruch 1, dadurch gekennzeichnet, daß die beiden die Ebene durch die Achsen der beiden Antriebsräder durchsetzenden Trägerabschnitte des Trägers entlang der den Wickeldornen zugewandten Stirnseiten der Antriebsräder seitlich verlaufend angeordnet sind.

FIG.1

FIG.2

FIG.3

2-II-PHO 89-515